# EUROPEAN PATENT SPECIFICATION

(11) **EP 1 738 961 B1**
(45) Date of publication and mention of the grant of the patent: **19.03.2014**
(21) Application number: 05013470.9
(22) Date of filing: 22.06.2005
(51) Int. Cl.: B60R 11/02, G01C 21/36

(54) **System and method for operating a device in a multi-user environment comprising multiple seats**
System und Verfahren zum Bedienen eines Gerätes in einer Mehrbenutzerumgebung mit mehreren Sitzen
Système et méthode d'utilisation d'un appareil dans un environnement à utilisateurs multiples comprenant une multitude de sièges

(43) Date of publication of application: 03.01.2007
(73) Proprietor: Alpine Electronics, Inc., Tokyo (JP)
(72) Inventor: Galos, Andreas c/o Alpine Electronics R+D, 70567 Stuttgart (DE)
(74) Representative: Klunker . Schmitt-Nilson . Hirsch

(56) References cited:
- JP-A- 7 103 778
- JP-A- 7 176 178
- JP-A- 2000 207 845
- JP-A- 2004 048 601
- US-A1- 2003 023 352
- US-A1- 2004 048 582
- US-A1- 2004 056 758

## Description

The present invention is directed to a system and a method for operating a device in a multi-user environment, the environment comprising multiple seats, wherein each of the seats is adapted to have at least one human body seated therein.

An environment comprising multiple seats wherein each of the seats is adapted to have at least one human body seated therein is constituted for example by a movable passenger car or cabin environment such as in an automobile. In automobiles audio or video entertainment or infotainment (entertainment and information) systems are installed, which are available in many different configurations. Usually an entertainment or infotainment system is designed so that movies or news can be watched or listened to in e.g. a rear seat of the automobile through a rear seat monitor. Particularly, audio is typically listened to with wirelessly communicating headphones so as not to be disturbed by noise including the driving noise of the vehicle or music for the front seat.

A typical automobile entertainment or infotainment system may include a head unit such as a receiver or amplifier which is placed in front of the driver's seat, for example in the mid console of the interior car environment. The head unit typically accepts audio or video signal inputs from one or multiple media devices such as a compact disc player, cassette deck, video player, etc. and includes controls such as a human machine interface accessible to the user e.g. via a remote controller for adjusting e.g. the volume or for selecting an audio track or the audio signal source.

One of the problems occurring when operating an entertainment or infotainment system in an automobile is the desire to identify the user or parallel users of the system. Typically, in such multi-user environments a special action of the user is required for the setting of the system configurations to constitute which passenger or user is using which of the system components.

In JP 07-103 778 A a system is disclosed used within a movable vehicle environment which enables a fellow passenger other than a driver of the vehicle to operate a device such as a navigation system of the vehicle. According to this system, the driver of a car is not permitted to program the navigation system blocking the operation by the driver during driving, but a fellow passenger should be allowed to operate the system. To this end, an operator identification signal generation means is provided under the passenger's seat, wherein an identification signal is detected by detection means when the passenger operates the control or operation means. Based on the identification signal it is determined whether the fellow passenger made an operation and, in this case, the predetermined action is performed based on the passenger's actuation signal.

US 2004/056758 A1 is directed to a method and an apparatus for selectively locking controls from operators operating equipment. Particularly, the mechanism provided therein is for selectively locking out certain equipment operators from certain features for safety reasons, while permitting access by others. Specifically, drivers of vehicles shall be prevented from operating selected pieces of equipment within a vehicle in order to minimize the danger due to related driver distraction.

It is an object of the **present** invention to provide a system and a method for operating a movable device in a multi-user environment, in which multiple devices may interact and may be used flexibly by users seated in different seats, which are capable to facilitate the configuration process.

This object is solved by a system according to claim 1 and by a method according to claim 14.

The system according to the invention comprises multiple seats, each adapted to have at least one human body seated therein and a first and a second device, at least one of which having a human machine interface. Each of the seats comprises identification means including an individual seat identification information. The first device comprises a processing unit for transmitting an identification information of the first device to one of the seats or for receiving an identification information of one of the seats via the human body seated in the one of the seats for assigning the first device to the one of the seats, and the second device is adapted to interact with the first device depending on the assignment of the first device.

According to the invention, the method for operating a device in such a multi-user environment comprises the steps of: the first device transmitting an identification information of the first device to one of the seats or receiving an identification information of one of the seats via the human body seated in the one of the seats, assigning the first device to one of the seats by means of the transmitted or received identification information, and interacting the first device with the second device depending on the assignment of the first device.

According to the invention, the system is adapted to provide individual control instantly whenever a user wished to control any device of the system. The main benefit of the invention is that no special action by the user is required in a configuration process. The system according to the invention may automatically set the system configurations to constitute which user is using which of the system components. In this concern, the basic idea of the present invention is to identify each user by the seat he is using, as the seat is the key element to define the profile or role of each person, e.g. in an automobile environment.

Each of the seats, which may be provided in an arbitrary number, comprises identification means including an individual seat identification information such as an individual seat identification code (ID code). The users will be identified for a device by sitting in a certain seat and transferring the seat identification information of the respective seat over their body to the device, or to another device interacting with the device. Thus, a certain device, for example a headphone of an entertainment or infotainment system, is automatically assigned to a seat when the user touches the headphone or puts the headphone on his head. In this configuration process no special action by the user is required. When the user puts on any headphone, he will automatically listen to his individual program of the entertainment system, as the invention enables the system to identify the person who is currently assessing or using a certain device such as the headphone. Thus, each user will get his matching infotainment profile defined by the seat he or she is sitting in. For example, each user can use the same remote controller as one of the devices of the system to adjust his personal volume, track selection, etc.

According to the invention, the first device is capable to be moved from one of the seats to another one of the seats so that any user of the system can use the first device which is then assigned to the respective seat. Advantageously, the first device is portable and is adapted to communicate in a wireless manner with the second device. Thus, the first device may be flexibly used within the multi-user environment, whereby the system according to the invention ensures that the person who is currently assessing or using the device is identified so that the system configurations are set accordingly.

According to an embodiment of the invention, the second device is adapted to process identification information and to control or to be controlled by the first device in dependance thereon. The second device includes a memory for storing an identification information of the first device and identification information of the seat assigned to the first device. According to another embodiment, the first device comprises a memory for storing identification information of the assigned seat.

According to a further embodiment of the invention, the first device is adapted to provide communications or entertainment information to the user and the second device is remote from the first device, wherein the second device is a system providing the communications or entertainment information to the first device. For example, the first device is a headphone adapted to provide audio voice or music to the user and the second device is a system such as an audio amplifier providing respective audio signals to the headphone. For example, the second device is a head unit in the console of an automobile.

According to another embodiment of the invention, the first device is adapted to control the second device which is remote from the first device, wherein the second device is a system providing communications or entertainment information to the user seated in the respective seat assigned to the first device. For example, the first device is a remote controller to control the second device such as a head unit of an automobile which provides, e.g. entertainment information to the passengers.

The first device may be a device selected from the group comprising a media peripheral device such as a headphone, a remote controller, as mentioned above, and further a mobile phone, a PDA (Personal Digital Assistant), a personal computer, a communications network peripheral device or a game station.

The second device may be selected from the group comprising a media device such as a radio receiver, a disk or tape player, a mobile phone receiver, a communications network device, a video player or a game station. Moreover, the second device may be a digital file player processing a data format such as MP3. These components may interact with any one of the first devices as mentioned before. For example, the radio receiver may interact with a headphone and the communications network device may interact with a personal computer carried by one of the users.

According to another embodiment of the invention, the first device is automatically assigned to one of the seats when a user seated in one of the seats operates or touches the device. Thus, the first device can be operated instantly whenever the user operates or touches the device.

According to another embodiment of the invention, the operation of the first device or of the second device automatically starts upon touching the first device by the body of the user. For example, the user puts on any headphone and automatically listens to his individual program so that no further action by the user is required. Analogously, according to another embodiment of the invention, the operation of the first device or of the second device automatically stops upon loosing touch to the first device by the body of the user.

Further advantages, features and embodiments of the invention will be evident from the dependent claims.

The invention will now be described and will be better understood by reference to the following description of embodiments of the invention taken in conjunction with the accompanying drawings, wherein
- Fig. 1: shows an illustrative overview of system components according to an embodiment of the invention used in an automobile;
- Figs. 2 to 4: show schematic illustrations of basic system configurations according to an embodiment of the invention;
- Fig. 5: shows schematic illustrations showing an exemplary basic communications process within a system according to the embodiment of the Figures 1 to 4;
- Fig. 6: shows schematic illustrations showing another exemplary basic communications process within a system according to the embodiment of the Figures 1 to 4;
- Fig. 7: shows a flow chart of an operating process according to a first embodiment of the invention;
- Fig. 8: shows a flow chart of an operating process according to a second embodiment of the invention;
- Fig. 9: shows a flow chart of an operating process according to a third embodiment of the invention.

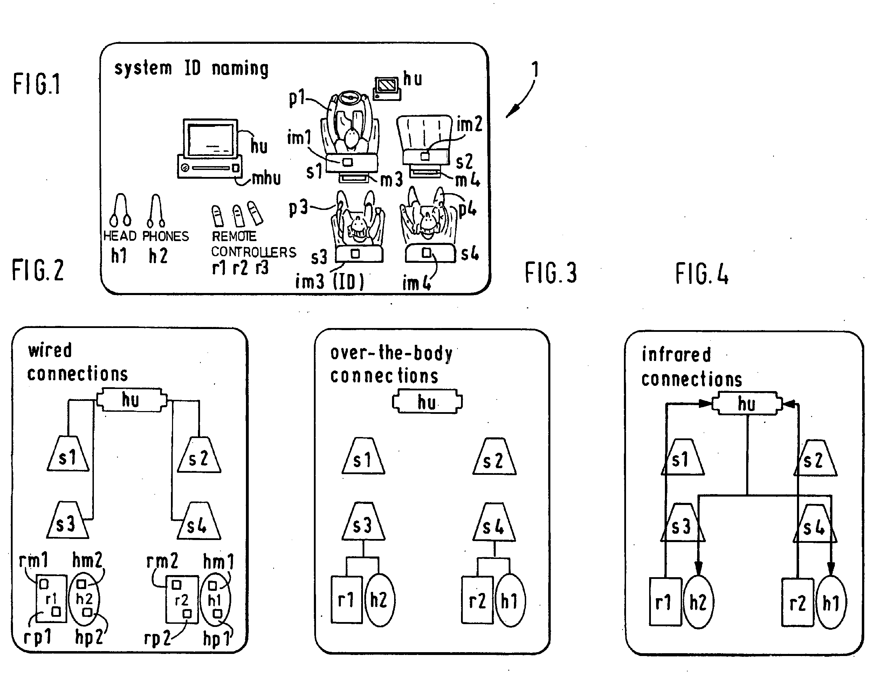

In Fig. 1 an illustrative overview of system components is shown, which are used in a multi-user environment of an automobile according to an embodiment of the invention. The multi-user environment 1 includes a central head unit hu, placed e.g. in the head console of the automobile, and multiple media peripheral devices such as headphones h1, h2 and remote controllers r1 to r3. The car environment 1 comprises multiple seats s1 to s4, each adapted to have at least one human body seated therein, such as passengers p1 to p4 seated in the respective seats s1 to s4, as shown in Fig. 1. Each of the seats s1 to s4 comprises identification means im1 to im4 which include an individual seat identification information, such as an individual seat identification code ID (stored e.g. in a memory device). The head unit hu may include a memory mhu for storing identification information of the devices r1 to r3, h1, h2 and identification information of the seats s1 to s4. The head unit hu may include a disk or tape player for playing audio tracks of a disk or tape having an infrared interface for transmitting respective audio signals to the headphones h1, h2. Moreover, the remote controllers r1 to r3 may include an infrared interface for communicating control signals to the head unit hu. The headphones and remote controllers may be used on any one of the seats s1 to s4 by any one of the passengers p1 to p4, who may put on any of the headphones for listening to audio tracks and may use the remote controllers for controlling the head unit hu accordingly. Thus, the headphones and remote controllers are capable to be moved from one of the seats to another one of the seats and are adapted to communicate in a wireless manner with the head unit hu.

According to Figures 2 to 4, schematic illustrations show the basic system configurations according to an embodiment of the invention. The seats s1 to s4 and their respective identification means im1 to im4 are connected through wired connections to the head unit hu, as shown in Fig. 2. According to an embodiment of the invention, the devices r1, r2, h1, h2 may include a respective memory rm1, rm2, hm1, hm2 for storing identification information, i.e. the respective ID code of the assigned seat s1 to s4. Moreover, the devices each comprise a respective processing unit rp1, rp2, hp1, hp2 for transmitting an identification information of the respective device to one of the seats or for receiving an identification information of one of the seats via the human body seated in one of the seats for assigning the respective device to the one of the seats.

Fig. 3 shows the over-the-body connections between the seats s3, s4 and the components r1, h2 and r2, h1, respectively. In this concern, there already exist methods and devices for distributing or transmitting electrical signals or data to devices coupled to the human body. Here, the human body is used as conductive medium, e.g. a bus over which the electrical signals or data are distributed. The electrical signals or data may be coupled to the human body by capacitive coupling via a respective set of electrodes. If the connection speed between the respective components via the human body is high enough, information such as control signals may also be distributed over the human body so that it might be possible to use remote controllers without infrared interface just by transmitting the codes through the user's body. Moreover, the over-the-body connection can be used for certain control functions by the head unit hu. For example, when a user puts on a headphone h1, h2 (connection between the headphone and the respective seat is established), his or her entertainment program will automatically start. Analogously, if the body of the user looses touch to the headphone, the operation of the headphone or of the head unit will automatically stop.

In Fig. 4 the infrared connections between the different components hu, r1, r2, h1, h2 are shown. The head unit hu is adapted to be controlled by the remote controllers r1, r2 via an infrared connection, whereas the head unit hu is adapted to control the headphones h1, h2 via other infrared connections.

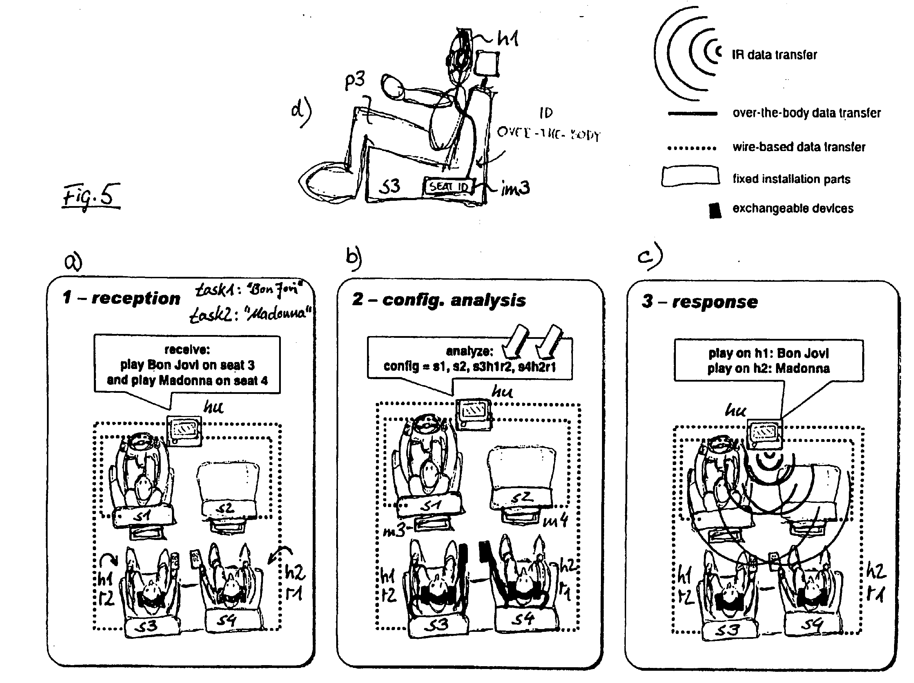

Fig. 5 shows schematic illustrations showing an exemplary basic communications process within a car environment as shown in Figures 1 to 4. However, according to the embodiment of Fig. 5, the seat s3 is connected via the human body to the remote controller r2 and the headphone h1, whereas seat s4 is connected to the remote controller r1 and the headphone h2. According to the illustrated embodiment, the head unit hu processes multiple tasks, wherein task 1 plays a CD of the band "Bon Jovi" and task 2 plays a CD of "Madonna". The first task (task 1) is assigned to a first one of the seats, namely seat s3, and the second task (task 2) is assigned to a second one of the seats, namely seat s4 (Fig. 5a)). In a following process the head unit analyzes the system configuration wherein the head unit hu detects the identification codes of headphone h1 and remote controller r2 associated with seat s3 and the identification codes of headphone h2 and remote controller r1 associated with seat s4 (Fig. 5b)). This means that the devices h1, r2 are assigned to the seat s3 and the devices h2, r1 are assigned to the seat s4.

According to Fig. 5c) the head unit hu interacts with the devices h1, h2 depending on the assignment of the devices. In particular, the head unit hu plays the CD of "Bon Jovi" on headphone h1 assigned to seat s3 and plays the CD of "Madonna" on headphone h2 assigned to seat s4. The head unit hu will provide on the respective channels of the headphones h1, h2 the respective control and audio signals. If the headphone h1 is handed over to the passenger on seat s4 and the headphone h2 is handed over to the passenger on seat s3, then headphone h1 will receive "Madonna", whereas headphone h2 will receive "Bon Jovi", as the head unit hu detects the assignment of headphone h2 to seat s3 and of headphone h1 to seat s4. This means that the head unit hu communicates with the headphone h1 in terms of the first task (task 1) if the headphone is assigned to seat s3 and communicates with the headphone h1 in terms of the second task (task 2) if the headphone is assigned to seat s4.

In other words, the head unit hu operates, or not, the headphone h1 in dependance on the identification information of the seat which is assigned to the headphone h1. For example, if the head unit hu executes only one task, for example task 1, the headphone h1 will not be operated by the head unit hu if it is assigned to seat s4. The head unit hu comprises a human machine interface by means of which a user seated in one of the seats may input an information request either directly or via remote controllers r1, r2.

Fig. 5d) shows a schematic cross-sectional view of a passenger p3 seating in seat s3 and wearing headphone h1, with the corresponding over-the-body connection between h1 and the identification means im3 including a seat ID code of seat s3.

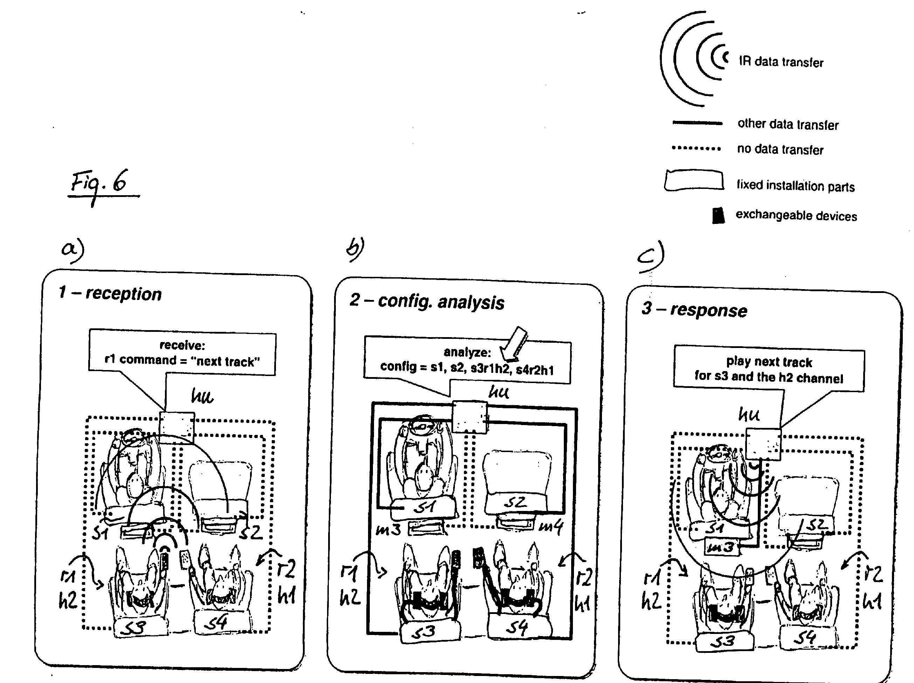

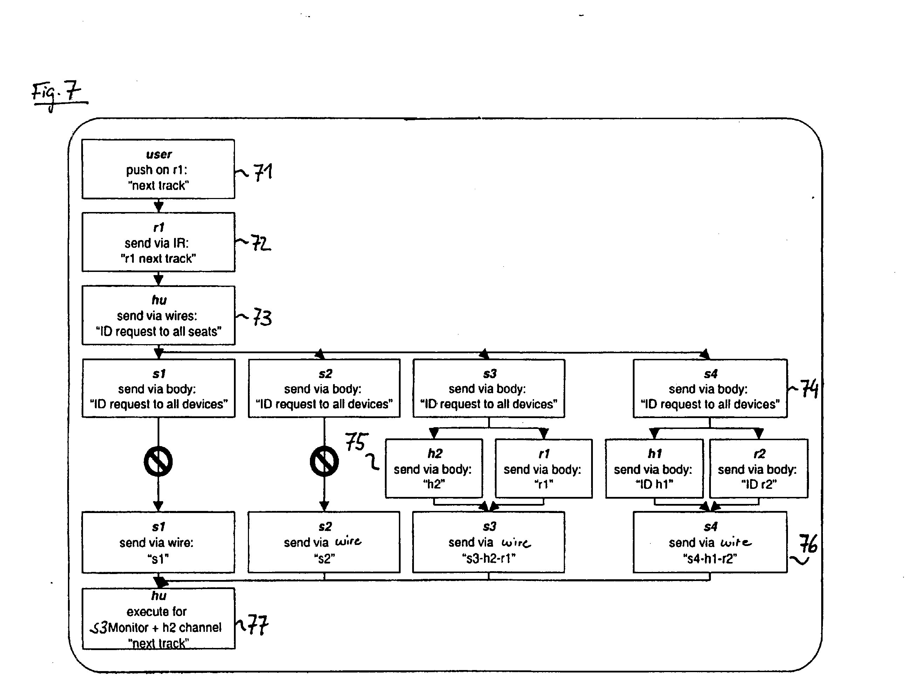

In Fig. 6 schematic illustrations showing another exemplary basic communications process of system components according to the invention are shown. According to this embodiment, following the configuration of Figures 2 to 4, the devices r1, h2 are assigned to seat s3 and the devices r2, h1 are assigned to seat s4. The communications process according to Fig. 6 will be described by reference to the flow chart of Fig. 7.

According to the embodiment of Fig. 7, which shows an operating process according to a first embodiment of the invention, the head unit hu is adapted to process identification information and to control the headphones h1, h2 or to be controlled by the remote controllers r1, r2 in dependance thereon. The head unit hu ("master control") requests and processes all identification information available from the seats s1 to s4 and of the devices r1, r2, h1, h2.

In particular, in process step 71 the user pushes on remote controller r1 to select the command "next track". In step 72, the remote controller r1 sends via infrared connection "r1 next track" to the head unit hu. Thus, the head unit hu receives via remote controller r1 a service request by the user p3 seated in seat s3. In step 73, the head unit hu transmits an information request to seat s3 and to the remaining seats s1, s2, s4 requesting identification information from seat s3 and from the other seats, and from any device which is to be assigned to one of the seats. In process step 74 each one of the seats transmits an information request requesting identification information from any device held or touched by the user seated in the respective seat via the human body. In particular, seat s3 transmits an information request requesting identification information from devices r1, h2 held or touched by user p3 seated in seat s3. In process step 75 the devices r1, h2 transmit their identification information via the human body to seat s3, whereas the devices r2, h1 transmit their identification information to seat s4. The identification information of the devices may be an identification code ID. In following step 76 the seat s3 transmits correspondent configuration data to the head unit hu as well as the seat s4. In process step 77 the head unit hu assigns the headphone h2 and remote controller r1 to seat s3 and serves the service request by the user according to the configuration data received by seat s3. In particular, it executes on monitor m3 (Fig. 1), which is in the headrest in front of seat s3, respective information, and executes on the transmission channel for headphone h2 the respective requested track. The monitor m3 is controlled by head unit hu via a wired connection, as shown in Fig. 6c).

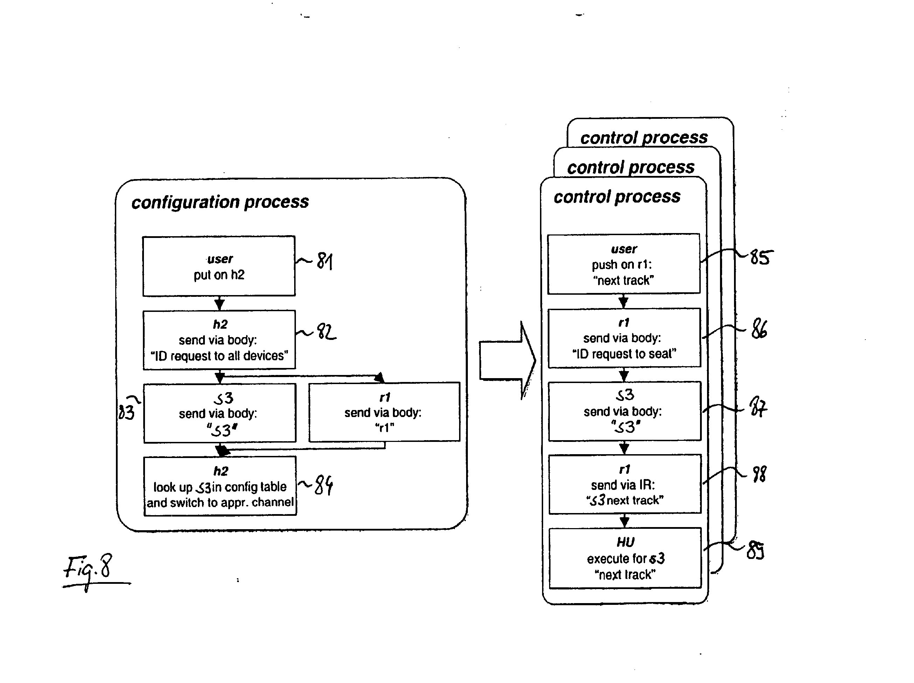

Fig. 8 shows another flow chart of an operating process according to a second embodiment of the invention. According to this embodiment, for example headphone h2 detects its own configuration by requesting and processing identification information available from one of the seats s1 to s4 and any other device. According to process step 81 the user p3 holds or touches a remote controller r1 as a first device for transmitting a service request to the head unit hu as a second device, and holds or touches the headphone h2 as a third device, wearing it on the user's head. The headphone h2 transmits an information request to the seat s3 (process step 82) requesting identification information from seat s3. Moreover, it sends an information request to all devices connected to the same human body of user p3. According to process step 83 seat s3 transmits its identification information via the human body seated in that seat to the headphone h2, and the remote controller r1 sends its identification information likewise to headphone h2. The headphone h2 is assigning itself to seat s3 by looking up seat s3 in a corresponding configuration table and performs a configuration operation in dependence thereon. In particular, headphone h2 switches to the appropriate channel designated for seat s3 (process step 84).

On the right hand side of Fig. 8 a control process according to the second embodiment is shown. According to process step 85 the remote controller r1 receives a service request by the user p3 seated in seat s3. The service request is "next track" similar to the one of Fig. 7. In step 86 the remote controller r1 transmits an information request to seat s3 requesting identification information from seat s3 via the human body. In process step 87 the seat s3 transmits identification information of its identification means via the human body to the remote controller r1. In step 88 the remote controller r1 transmits identification information of seat s3 and the service request of the user to the head unit hu, which in turn serves the service request by the user according to the identification information received by the remote controller r1 (step 89). In other words, the head unit hu executes for seat s3 and its monitor m3 a service request "next track". The headphone h2 is already tuned to the appropriate channel according to its preliminary self-configuration process as shown on the left hand side of Fig. 8.

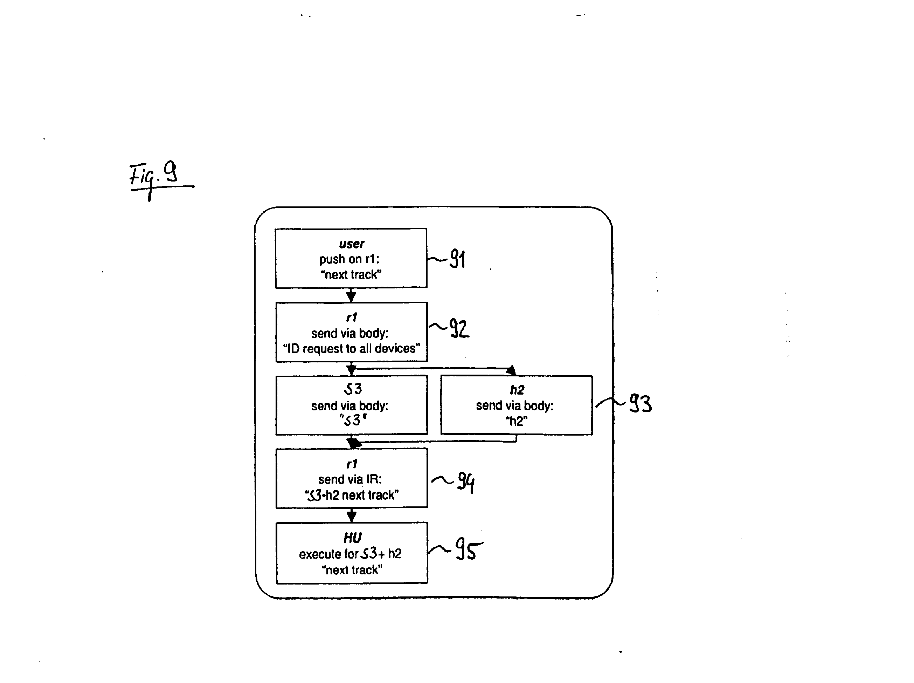

In Fig. 9 there is shown a flow chart of an operating process according to a third embodiment of the invention. According to this embodiment the remote controller r1 receives a service request by a user seated in one of the seats (seat s3) and manages further devices like headphone h2, which are held or touched by the user, and transmits related configuration data to the head unit hu for serving the service request. In other words, the remote controller r1 manages all devices which are connected to the same human body of a user and sends the total configuration data to the head unit.

According to process step 91, the remote controller r1 receives a service request "next track" by user p3 seated in seat s3. In process step 92, the remote controller r1 transmits an information request requesting identification information via the human body from the seat s3 and from at least another device such as the headphone h2 put on the head of user p3 and which is to be assigned to seat s3. In process step 93 seat s3 transmits identification information, i.e. its identification code via the human body to the remote controller r1 and the headphone h2 transmits its identification information via the human body to the remote controller r1 as well. In step 94 the remote controller r1 transmits corresponding configuration data to the head unit hu and the service request by the user. In following process step 95 the head unit hu assigns the remote controller r1 and the headphone h2 to seat s3 and serves the service request by the user according to the configuration data received by remote controller r1.

According to another embodiment of the invention, the car configuration environment may include for example two disk or tape players in the car, such as one on the rear left side and one on the rear right side of the car. By pressing a button both players may be set in a "learn headphone IDs" mode, e.g. by pressing a button on the player or a menu item on the screen of one of the monitors m3, m4. If the headphone ID contains information about the headphone's audio channel, the player will know immediately on which channel to play the audio information. Such a headphone ID could be "IDh3" which means that this device is a headphone and that it is set to receive audio on channel 3. Accordingly, the players know the IDs of both headphones. A user may sit down in one seat and put on his or her headphone. All players and other entertainment devices and all seats are connected via a bus cable as previously mentioned. All players will receive the information that headphone h1 is at seat s4, for example. Then the player which is responsible for seat s4 (because its monitor is in the headrest in front of s4) will start playing the program. The player may permanently check if a headphone ID is available. As soon as a headphone ID gets lost, the player will interrupt playing the program. Here, the program may be in pause-condition as long as the player does not receive a headphone ID.

As mentioned above with reference to the drawings, the system according to the invention may be installed within a car environment of an automobile. However, the invention may be used within any movable car or cabin environment such as applied in the automotive, railway or aviation technical field, having multiple seats wherein each of the seats is adapted to have at least one passenger seated therein. On the other hand, the invention may also be used in any (stationary or movable) multi-user environment providing information of any kind, in particular communications or infotainment services to multiple users flexibly using different devices for receiving the communications or infotainment information.

## Claims

1. A system, comprising:
- multiple seats (s1 - s4) each adapted to have at least one human body (p1 - p4) seated therein,
- a first (r1, r2, h1, h2) and a second device (hu), at least one of which having a human machine interface,
- wherein each of the seats (s1 - s4) comprising identification means (im1 - im4) including an individual seat identification information (ID),
- wherein the first device (r1, r2, h1, h2) being capable to be moved from one of the seats (s1 - s4) to another one of the seats and comprising a processing unit (rp1, rp2, hp1, hp2) for transmitting an identification information of the first device to one of the seats or for receiving an identification information (ID) of one of the seats via the human body seated in the one of the seats for assigning the first device to the one of the seats for being used by a user seated in the one of the seats,
- wherein the second device (hu) is adapted to interact with the first device (r1, r2, h1, h2) depending on the assignment of the first device.

2. The system according to claim 1, wherein
the identification means (im1 - im4) of each of the seats including an individual seat identification code (ID).

3. The system according to any one of the preceding claims, wherein
the first device (r1, r2, h1, h2) is portable and is adapted to communicate in a wireless manner with the second device (hu).

4. The system according to any one of the preceding claims, wherein
- the second device (hu) is adapted to process identification information (ID) and to control or to be controlled by the first device (r1, r2, h1, h2) in dependance thereon,
- wherein the second device (hu) including a memory (mhu) for storing identification information of the first device (r1, r2, h1, h2) and identification information of the seat (s1 - s4) assigned to the first device.

5. The system according to any one of the preceding claims, wherein
- the second device (hu) comprises a human machine interface by means of which a user (p1 - p4) seated in one of the seats may input an information request,
- the second device (hu) operates, or not, the first device (h1, h2) in dependance on identification information of the seat (s1 - s4) assigned to the first device.

6. The system according to any one of the preceding claims, wherein
- the second device (hu) processes multiple tasks, wherein a first task (task1) is assigned to a first one of the seats (s3) and a second task (task2) is assigned to a second one of the seats (s4),
- the second device (hu) communicates with the first device (h1) in terms of the first task (task1) if the first device is assigned to the first one of the seats (s3) and communicates with the first device (h2) in terms of the second task (task2) if the first device is assigned to the second one of the seats (s4).

7. The system according to any one of the preceding claims, wherein
the first device (r1, r2, h1, h2) comprises a memory (rm1, rm2, hm1, hm2) for storing identification information of the assigned seat (s1 - s4).

8. The system according to any one of the preceding claims, wherein
the first device (h1, h2) is adapted to provide information to the user (p1 - p4), in particular communications or infotainment information, and the second device (hu) is remote from the first device, wherein the second device is a system providing the information to the first device.

9. The system according to any one of the preceding claims, wherein
the first device (r1, r2) is adapted to control the second device (hu) which is remote from the first device, wherein the second device is a system providing communications or entertainment information to the user (p1 - p4) seated in the respective seat assigned to the first devide.

10. The system according to any one of the preceding claims, wherein
the first device (r1, r2, h1, h2) is a device selected from the group comprising a media peripheral device or communications device, in particular a headphone, a remote controller, a mobile phone, a PDA, a personal computer, a communications network peripheral device or a game station.

11. The system according to any one of the preceding claims, wherein
the second device (hu) is a device selected from the group comprising a media device or communications device, in particular a radio receiver, a disk or tape player, a mobile phone receiver, a communications network device, a video player, a digital file player or a game station.

12. The system according to any one of the preceding claims, wherein
- the system being installed within a movable car or cabin environment (1) having multiple seats (s1 - s4) wherein each of the seats is adapted to have at least one passenger (p1 - p4) seated therein,
- the first device (r1, r2, h1, h2) is adapted to be operated within the passenger car or cabin environment.

13. The system according to claim 12, wherein
the second device (hu) is a central unit of the car or cabin environment (1) and the first device (r1, r2, h1, h2) is a peripheral device of the car or cabin environment.

14. A method for operating a device in a multi-user environment, the environment (1) comprising multiple seats (s1 - s4), each of the seats adapted to have at least one human body (p1 - p4) seated therein and each of the seats comprising identification means (im1 - im4) including an individual identification information (ID), and a first (r1, r2, h1, h2) and a second device (hu), at least one of which having a human machine interface, wherein the first device is capable to be moved from one of the seats (s1 - s4) to another one of the seats, the method comprising the steps of:
- the first device (r1, r2, h1, h2) transmitting an identification information of the first device to one of the seats or receiving an identification information (ID) of one of the seats via the human body seated in the one of the seats,
- assigning the first device (r1, r2, h1, h2) to the one of the seats (s1 - s4) for being used by a user seated in the one of the seats by means of the transmitted or received identification information (ID),
- interacting the first device (r1, r2, h1, h2) with the second device (hu) depending on the assignment of the first device.

15. The method according to claim 14, wherein
the second device (hu), which is adapted to process identification information and to control or to be controlled by the first device (r1, r2, h1, h2) in dependance thereon, requests and processes all identification information available from the seats (s1 - s4) and the first device.

16. The method according to claim 14 or 15, wherein
- the second device (hu) receives a service request by a user (p1 - p4) seated in a first one of the seats (s3),
- the second device (hu) transmitting an information request to the first one of the seats (s3) requesting identification information from the first one of the seats and from at least one first device (h2, r1) which is to be assigned to the first one of the seats,
- the first one of the seats (s3) transmitting an information request requesting identification information from the first device (h2, r1) held or touched by the user (p3) seated in the first one of the seats via the human body,
- the first device (h2, r1) transmitting an identification information via the human body to the first one of the seats (s3),
- the first one of the seats (s3) transmitting corresponding configuration data to the second device (hu),
- the second device (hu) assigning the first device (h2, r1) to the first one of the seats (s3) and serving the service request by the user according to the configuration data received by the first one of the seats.

17. The method according to claim 14, wherein
the first device (h2) is detecting its own configuration by requesting and processing identification information available from one of the seats (s1 - s4) and any other device (r1, r2, h1).

18. The method according to claim 14 or 17, wherein
- the first device (r1) receives a service request by a user (p3) seated in a first one of the seats (s3),
- the first device (r1) transmitting an information request to the first one of the seats (s3) requesting identification information from the first one of the seats via the human body,
- the first one of the seats (s3) transmitting identification information via the human body to the first device (r1),
- the first device (r1) transmitting identification information of the first one of the seats (s3) and the service request by the user to the second device (hu),
- the second device (hu) serving the service request by the user according to the identification information received by the first device (r1).

19. The method according to claim 18, wherein
- the user (p3) transmitting the service request holds or touches a third device (h2),
- the third device (h2) transmitting an information request to the first one of the seats (s3) requesting identification information from the first one of the seats,
- the first one of the seats (s3) transmitting identification information via the human body seated in the first one of the seats to the third device (h2),
- the third device (h2) assigning itself to the first one of the seats (s3) and performing a configuration operation in dependance thereon.

20. The method according to claim 14, wherein
the first device (r1) receives a service request by a user (p3) seated in a first one of the seats (s3) and manages further devices (h2) which are held or touched by the user and transmits related configuration data to the second device (hu) for serving the service request.

21. The method according to claim 14 or 20, wherein
- the first device (r1) receives a service request by a user (p3) seated in a first one of the seats (s3),
- the first device (r1) transmitting an information request requesting identification information via the human body of the user from the first one of the seats (s3) and from at least one third device (h2) which is to be assigned to the first one of the seats (s3),
- the first one of the seats (s3) transmitting identification information via the human body to the first device (r1),
- the third device (h2) transmitting identification information via the human body to the first device (r1),
- the first device (r1) transmitting corresponding configuration data to the second device (hu) and the service request by the user,
- the second device (hu) assigning the first and third device (r1, h2) to the first one of the seats (s3) and serving the service request by the user according to the configuration data received by the first device (r1).

22. The method according to one of claims 14 to 21, wherein
the first device (r1, r2, h1, h2) is automatically assigned to one of the seats (s1 - s4) when a user (p1 - p4) seated in the one of the seats operates or touches the device.

23. The method according to one of claims 14 to 22, wherein
upon touching the first device (r1, r2, h1, h2) by the body of the user, the operation of the first device or of the second device (hu) automatically starts.

24. The method according to one of claims 14 to 23, wherein
upon loosing touch to the first device (r1, r2, h1, h2) by the body of the user, the operation of the first device or of the second device (hu) automatically stops.

## Patentansprüche

1. System, das Folgendes aufweist:
- mehrere Sitze (s1 - s4), die jeweils dazu ausgebildet sind, dass mindestens ein menschlicher Körper (p1 - p4) darauf sitzt,
- eine erste (r1, r2, h1, h2) und eine zweite Vorrichtung (hu), von denen mindestens eine eine Mensch-Maschine-Schnittstelle aufweist,
- wobei jeder der Sitze (s1 - s4) eine Identifikationseinrichtung (im1 - im4) aufweist, die individuelle Sitzidentifikationsinformation (ID) beinhaltet,
- wobei die erste Vorrichtung (r1, r2, h1, h2) von einem der Sitze (s1 - s4) zu einem anderen der Sitze bewegt werden kann und eine Verarbeitungseinheit (rp1, rp2, hp1, hp2) zum Übermitteln von Identifikationsinformation der ersten Vorrichtung zu einem der Sitze oder zum Empfangen von Identifikationsinformation (ID) von einem der Sitze über den auf einem der Sitze sitzenden menschlichen Körper aufweist, um die erste Vorrichtung dem einen der Sitze für die Benutzung durch einen auf dem einen Sitz sitzenden Benutzer zuzuordnen,
- wobei die zweite Vorrichtung (hu) dazu ausgebildet ist, mit der ersten Vorrichtung (r1, r2, h1, h2) in Abhängigkeit von der Zuordnung der ersten Vorrichtung zu interagieren.

2. System nach Anspruch 1,
wobei die Identifikationseinrichtung (im1 - im4) von jedem der Sitze einen individuellen Sitzidentifikationscode (ID) aufweist.

3. System nach einem der vorhergehenden Ansprüche,
wobei die erste Vorrichtung (r1, r2, h1, h2) tragbar ist und dazu ausgebildet ist, mit der zweiten Vorrichtung (hu) in drahtloser Weise zu kommunizieren.

4. System nach einem der vorhergehenden Ansprüche,
- wobei die zweite Vorrichtung (hu) dazu ausgebildet ist, Identifikationsinformation (ID) zu verarbeiten sowie die erste Vorrichtung (r1, r2, h1, h2) in Abhängigkeit davon zu steuern oder von dieser gesteuert zu werden,
- wobei die zweite Vorrichtung (hu) einen Speicher (mhu) zum Speichern von Identifikationsinformation der ersten Vorrichtung (r1, r2, h1, h2) und Identifikationsinformation des Sitzes (s1 - s4) aufweist, der der ersten Vorrichtung zugeordnet ist.

5. System nach einem der vorhergehenden Ansprüche,
- wobei die zweite Vorrichtung (hu) eine Mensch-Maschine-Schnittstelle aufweist, mittels der ein auf einem der Sitze sitzender Benutzer (p1 - p4) eine Informationsanforderung eingeben kann,
- wobei die zweite Vorrichtung (hu) die erste Vorrichtung (h1, h2) in Abhängigkeit von Identifikationsinformation des der ersten Vorrichtung zugeordneten Sitzes (s1 - s4) betreibt oder nicht betreibt.

6. System nach einem der vorhergehenden Ansprüche,
- wobei die zweite Vorrichtung (hu) mehrere Aufgaben verarbeitet, wobei eine erste Aufgabe (task1) einem ersten der Sitze (s3) zugeordnet ist und eine zweite Aufgabe (task2) einem zweiten der Sitze (s4) zugeordnet ist,
- wobei die zweite Vorrichtung (hu) mit der ersten Vorrichtung (h1) in Bezug auf die erste Aufgabe (task1) kommuniziert, wenn die erste Vorrichtung dem ersten der Sitze (s3) zugeordnet ist, und mit der ersten Vorrichtung (h2) in Bezug auf die zweite Aufgabe (task2) kommuniziert, wenn die erste Vorrichtung dem zweiten der Sitze (s4) zugeordnet ist.

7. System nach einem der vorhergehenden Ansprüche,
wobei die erste Vorrichtung (r1, r2, h1, h2) einen Speicher (rm1, rm2, hm1, hm2) zum Speichern von Identifikationsinformation des zugeordneten Sitzes (s1 - s4) aufweist.

8. System nach einem der vorhergehenden Ansprüche,
wobei die erste Vorrichtung (h1, h2) dazu ausgebildet ist, dem Benutzer (p1 - p4) Information bereitzustellen, insbesondere Kommunikations- oder Infotainment-Information, und die zweite Vorrichtung (hu) entfernt von der ersten Vorrichtung vorgesehen ist, wobei die zweite Vorrichtung ein System ist, das der ersten Vorrichtung die Information bereitstellt.

9. System nach einem der vorhergehenden Ansprüche,
wobei die erste Vorrichtung (h1, h2) dazu ausgebildet ist, die von der ersten Vorrichtung entfernte zweite Vorrichtung (hu) zu steuern, wobei die zweite Vorrichtung ein System ist, das dem Benutzer (p1 - p4), der auf dem jeweiligen, der ersten Vorrichtung zugeordneten Sitz sitzt, Kommunikations- oder Unterhaltungsinformation bereitstellt.

10. System nach einem der vorhergehenden Ansprüche,
wobei die erste Vorrichtung (r1, r2, h1, h2) eine Vorrichtung ist, die aus der Gruppe ausgewählt ist, die Folgendes aufweist: ein Medien-Peripheriegerät oder eine Medien-Kommunikationsvorrichtung, insbesondere einen Kopfhörer, eine Fernbedienung, ein Mobiltelefon, ein PDA, einen Personal-Computer, ein Kommunikationsnetzwerk-Peripheriegerät oder eine Spiel-Station.

11. System nach einem der vorhergehenden Ansprüche,
wobei die zweite Vorrichtung (hu) eine Vorrichtung ist, die aus der Gruppe ausgewählt ist, die Folgendes aufweist: ein Mediengerät oder eine Medien-Kommunikationsvorrichtung, insbesondere einen Funkempfänger, ein Disk- oder Bandabspielgerät, einen Mobiltelefonempfänger, eine Kommunikationsnetzwerkvorrichtung, ein Video-Abspielgerät, ein Abspielgerät für digitale Dateien oder eine Spiel-Station.

12. System nach einem der vorhergehenden Ansprüche,
- wobei das System in einer beweglichen Fahrzeug- oder Kabinenumgebung (1) mit mehreren Sitzen (s1 - s4) installiert ist, wobei jeder der Sitze dazu ausgebildet ist, dass mindestens ein Passagier (p1 - p4) darauf sitzt,
- wobei die erste Vorrichtung (r1, r2, h1, h2) dazu ausgebildet ist, in der Personenkraftwagen- oder Kabinenumgebung betrieben zu werden.

13. System nach Anspruch 12,
wobei die zweite Vorrichtung (hu) eine Zentraleinheit der Fahrzeug- oder Kabinenumgebung (1) ist und die erste Vorrichtung (r1, r2, h1, h2) ein Peripheriegerät der Fahrzeug- oder der Kabinenumgebung ist.

14. Verfahren zum Betreiben einer Vorrichtung in einer Mehrbenutzer-Umgebung, wobei die Umgebung (1) mehrere Sitze (s1 - s4) aufweist, wobei jeder der Sitze dazu ausgebildet ist, dass mindestens ein menschlicher Körper (p1 - p4) darauf sitzt, und jeder der Sitze eine Identifikationseinrichtung (im1 - im4), die individuelle Identifikationsinformation (ID) beinhaltet, sowie eine erste (r1, r2, h1, h2) und eine zweite Vorrichtung (hu) aufweist, von denen mindestens eine eine Mensch-Maschine-Schnittstelle aufweist, wobei die erste Vorrichtung von einem der Sitze (s1 - s4) zu einem anderen der Sitze bewegt werden kann, wobei das Verfahren folgende Schritte aufweist:
- durch die erste Vorrichtung (r1, r2, h1, h2) erfolgendes Übermitteln von Identifikationsinformation der ersten Vorrichtung zu einem der Sitze oder Empfangen von Identifikationsinformation (ID) von einem der Sitze über den auf dem einen der Sitze sitzenden menschlichen Körper,
- Zuordnen der ersten Vorrichtung (r1, r2, h1, h2) zu dem einen der Sitze (s1 - s4) für die Benutzung durch einen auf dem einen der Sitze sitzenden Benutzer mittels der übermittelten oder empfangenen Identifikationsinformation (ID),
- Interagieren der ersten Vorrichtung (r1, r2, h1, h2) mit der zweiten Vorrichtung (hu) in Abhängigkeit von der Zuordnung der ersten Vorrichtung.

15. Verfahren nach Anspruch 14,
wobei die zweite Vorrichtung (hu), die dazu ausgebildet ist, Identifikationsinformation zu verarbeiten sowie die erste Vorrichtung (r1, r2, h1, h2) in Abhängigkeit davon zu steuern oder von dieser gesteuert zu werden, die gesamte Identifikationsinformation, die von den Sitzen (s1 - s4) und der ersten Vorrichtung verfügbar ist, anfordert und verarbeitet.

16. Verfahren nach Anspruch 14 oder 15,
- wobei die zweite Vorrichtung (hu) eine Dienstanforderung von einem Benutzer (p1 - p4) empfängt, der auf einem ersten der Sitze (s3) sitzt,
- wobei die zweite Vorrichtung (hu) eine Informationsanforderung zu dem ersten der Sitze (s3) übermittelt, die Identifikationsinformation von dem ersten der Sitze und von mindestens einer ersten Vorrichtung (h2, r1) anfordert, die dem ersten der Sitze zugeordnet werden soll,
- wobei der erste der Sitze (s3) über den menschlichen Körper eine Informationsanforderung übermittelt, die Identifikationsinformation von der ersten Vorrichtung (h2, r1) anfordert, die von dem auf dem ersten der Sitze sitzenden Benutzer (p3) gehalten oder berührt wird,
- wobei die erste Vorrichtung (h2, r1) Identifikationsinformation über den menschlichen Körper zu dem ersten der Sitze (S3) übermittelt,
- wobei der erste der Sitze (s3) entsprechende Konfigurationsdaten an die zweite Vorrichtung (hu) übermittelt,
- wobei die zweite Vorrichtung (hu) die erste Vorrichtung (h2, r1) dem ersten der Sitze (s3) zuordnet und die Dienstanforderung von dem Benutzer in Abhängigkeit von den von dem ersten der Sitze empfangenen Konfigurationsdaten bedient.

17. Verfahren nach Anspruch 14,
wobei die erste Vorrichtung (h2) ihre eigene Konfiguration erfasst durch Anfordern und Verarbeiten von Identifikationsinformation, die von einem der Sitze (s1 - s4) und einer beliebigen anderen Vorrichtung (r1, r2, h1) verfügbar ist.

18. Verfahren nach Anspruch 14 oder 17,
- wobei die erste Vorrichtung (r1) eine Dienstanforderung von einem auf einem ersten der Sitze (S3) sitzenden Benutzer (p3) empfängt,
- wobei die erste Vorrichtung (r1) eine Informationsanforderung zu dem ersten der Sitze (s3) übermittelt, die Identifikationsinformation von dem ersten der Sitze über den menschlichen Körper anfordert,
- wobei der erste der Sitze (s3) Identifikationsinformation über den menschlichen Körper zu der ersten Vorrichtung (r1) übermittelt,
- wobei die erste Vorrichtung (r1) Identifikationsinformation von dem ersten der Sitze (s3) und die Dienstanforderung von dem Benutzer zu der zweiten Vorrichtung (hu) übermittelt,
- wobei die zweite Vorrichtung (hu) die Dienstanforderung von dem Benutzer in Abhängigkeit von der von der ersten Vorrichtung (r1) empfangenen Identifikationsinformation bedient.

19. Verfahren nach Anspruch 18,
- wobei der die Dienstanforderung übermittelnde Benutzer (p3) eine dritte Vorrichtung (h2) hält oder berührt,
- wobei die dritte Vorrichtung (h2) eine Informationsanforderung zu dem ersten der Sitze (s3) übermittelt, die Identifikationsinformation von dem ersten der Sitze anfordert,
- wobei der erste der Sitze (s3) Identifikationsinformation über den auf dem ersten der Sitze sitzenden menschlichen Körper zu der dritten Vorrichtung (h2) übermittelt,
- wobei die dritte Vorrichtung (h2) sich selbst dem ersten der Sitze (s3) zuordnet und einen Konfigurationsvorgang in Abhängigkeit davon durchführt.

20. Verfahren nach Anspruch 14,
- wobei die erste Vorrichtung (r1) eine Dienstanforderung von einem auf einem ersten der Sitze (S3) sitzenden Benutzer empfängt und weitere Vorrichtungen (h2) verwaltet, die von dem Benutzer gehalten oder berührt werden, und zugehörige Konfigurationsdaten zu der zweiten Vorrichtung (hu) zum Bedienen der Dienstanforderung übermittelt.

21. Verfahren nach Anspruch 14 oder 20,
- wobei die erste Vorrichtung (r1) eine Dienstanforderung von einem auf einem ersten der Sitze (s3) sitzenden Benutzer (p3) empfängt,
- wobei die erste Vorrichtung (r1) eine Informationsanforderung übermittelt, die Identifikationsinformation über den menschlichen Körper des Benutzers von dem ersten der Sitze (s3) und von mindestens einer dritten Vorrichtung (h2) anfordert, die dem ersten der Sitze (S3) zugeordnet werden soll,
- wobei der erste der Sitze (s3) Identifikationsinformation über den menschlichen Körper zu der ersten Vorrichtung (r1) übermittelt,
- wobei die dritte Vorrichtung (h2) Identifikationsinformation über den menschlichen Körper zu der ersten Vorrichtung (r1) übermittelt,
- wobei die erste Vorrichtung (r1) entsprechende Konfigurationsdaten zu der zweiten Vorrichtung (hu) sowie die Dienstanforderung von dem Benutzer übermittelt,
- wobei die zweite Vorrichtung (hu) die erste und die dritte Vorrichtung (r1, h2) dem ersten der Sitze (S3) zuordnet und die Dienstanforderung von dem Benutzer in Abhängigkeit von den von der ersten Vorrichtung (r1) empfangenen Konfigurationsdaten bedient.

22. Verfahren nach einem der Ansprüche 14 bis 21,
wobei die erste Vorrichtung (r1, r2, h1, h2) einem der Sitze (s1 - s4) automatisch zugeordnet wird, wenn ein auf dem einen der Sitze sitzender Benutzer die Vorrichtung betätigt oder berührt.

23. Verfahren nach einem der Ansprüche 14 bis 22,
wobei bei Berührung der ersten Vorrichtung (r1, r2, h1, h2) durch den Körper des Benutzers der Betrieb der ersten Vorrichtung oder der zweiten Vorrichtung (hu) automatisch beginnt.

24. Verfahren nach einem der Ansprüche 14 bis 23,
wobei bei Verlust der Berührung mit der ersten Vorrichtung (r1, r2, h1, h2) durch den Körper des Benutzers der Betrieb der ersten Vorrichtung oder der zweiten Vorrichtung (hu) automatisch stoppt.

## Revendications

1. Système comprenant :
- plusieurs sièges (s1 - s4) adaptés chacun pour avoir au moins un corps humain (p1 - p4) assis dans ce dernier,
- un premier (r1, r2, h1, h2) et un deuxième dispositif (hu), au moins l'un d'entre eux ayant une interface homme-machine,
- dans lequel chacun des sièges (s1 - s4) comprend un moyen d'identification (im1 - im4) incluant une information d'identification de siège individuelle (ID),
- dans lequel le premier dispositif (r1, r2, h1, h2) peut être déplacé de l'un des sièges (s1 - s4) à un autre des sièges et comprenant une unité de traitement (rp1, rp2, hp1, hp2) pour transmettre une information d'identification du premier dispositif à l'un des sièges ou pour recevoir une information d'identification (ID) de l'un des sièges via le corps humain assis dans ledit un des sièges pour attribuer le premier dispositif audit un des sièges afin qu'il soit utilisé par un utilisateur assis dans ledit un des sièges,
- dans lequel le deuxième dispositif (hu) est adapté pour interagir avec le premier dispositif (r1, r2, h1, h2) en fonction de l'attribution du premier dispositif.

2. Système selon la revendication 1, dans lequel le moyen d'identification (im1 - im4) de chacun des sièges comprend un code d'identification de siège individuel (ID).

3. Système selon l'une quelconque des revendications précédentes, dans lequel le premier dispositif (r1, r2, h1, h2) est portable et est adapté pour communiquer sans fil avec le deuxième dispositif (hu).

4. Système selon l'une quelconque des revendications précédentes, dans lequel :
- le deuxième dispositif (hu) est adapté pour traiter une information d'identification (ID) et pour commander ou être commandé par le premier dispositif (r1, r2, h1, h2) en fonction de celle-ci,
- dans lequel le deuxième dispositif (hu) comprend une mémoire (mhu) pour stocker une information d'identification du premier dispositif (r1, r2, h1, h2) et une information d'identification du siège (s1 - s4) attribué au premier dispositif.

5. Système selon l'une quelconque des revendications précédentes, dans lequel :
- le deuxième dispositif (hu) comprend une interface homme-machine au moyen de laquelle un utilisateur (p1 - p4) assis dans l'un des sièges peut saisir une demande d'information,
- le deuxième dispositif (hu) gère ou non le premier dispositif (h1, h2) en fonction de l'information d'identification du siège (s1 - s4) attribué au premier dispositif.

6. Système selon l'une quelconque des revendications précédentes, dans lequel :
- le deuxième dispositif (hu) traite plusieurs tâches, dans lequel une première tâche (task1) est attribuée à un premier des sièges (s3) et une deuxième tâche (task2) est attribuée à un deuxième des sièges (s4),
- le deuxième dispositif (hu) communique avec le premier dispositif (h1) relativement à la première tâche (task1) si le premier dispositif est attribué au premier des sièges (s3) et communique avec le premier dispositif (h2) relativement à la deuxième tâche (task2) si le premier dispositif est attribué au deuxième des sièges (s4).

7. Système selon l'une quelconque des revendications précédentes, dans lequel le premier dispositif (r1, r2, h1, h2) comprend une mémoire (rm1, rm2, hm1, hm2) pour stocker l'information d'identification du siège attribué (s1 - s4).

8. Système selon l'une quelconque des revendications précédentes, dans lequel le premier dispositif (h1, h2) est adapté pour fournir des informations à l'utilisateur (p1 p4), en particulier des informations de communications ou d'information-divertissement, et le deuxième dispositif (hu) est distant du premier dispositif, dans lequel le deuxième dispositif est un système qui fournit les informations au premier dispositif.

9. Système selon l'une quelconque des revendications précédentes, dans lequel le premier dispositif (r1, r2) est adapté pour commander le deuxième dispositif (hu) qui est distant du premier dispositif, dans lequel le deuxième dispositif est un système qui fournit des informations de communications ou de divertissement à l'utilisateur (p1 - p4) qui est assis dans le siège respectif attribué au premier dispositif.

10. Système selon l'une quelconque des revendications précédentes, dans lequel le premier dispositif (r1, r2, h1, h2) est un dispositif choisi dans le groupe comprenant un dispositif périphérique média ou un dispositif de communications, en particulier un casque d'écoute, une télécommande, un téléphone portable, un assistant personnel numérique, un ordinateur personnel, un dispositif périphérique de réseau de communications ou une console de jeu.

11. Système selon l'une quelconque des revendications précédentes, dans lequel le deuxième dispositif (hu) est un dispositif choisi dans le groupe comprenant un dispositif média ou un dispositif de communications, en particulier un récepteur radio, un lecteur de disques ou de cassettes, un récepteur téléphonique portable, un dispositif de réseau de communications, un lecteur vidéo, un lecteur de fichiers numériques ou une console de jeu.

12. Système selon l'une quelconque des revendications précédentes, dans lequel :
- le système est installé à l'intérieur d'une automobile ou dans un environnement de cabine (1) comportant plusieurs sièges (s1 - s4), dans lequel chacun des sièges est adapté pour avoir au moins un passager (p1 p4) assis dans ce dernier,
- le premier dispositif (r1, r2, h1, h2) est adapté pour être utilisé à l'intérieur de l'automobile ou de l'environnement de cabine.

13. Système selon la revendication 12, dans lequel le deuxième dispositif (hu) est une unité centrale de l'automobile ou de l'environnement de cabine (1) et le premier dispositif (r1, r2, h1, h2) est un dispositif périphérique de l'automobile ou de l'environnement de cabine.

14. Procédé d'utilisation d'un dispositif dans un environnement multi-utilisateur, l'environnement (1) comprenant plusieurs sièges (s1 - s4), chacun des sièges étant adapté pour avoir au moins un corps humain (p1 - p4) assis dans ce dernier, et chacun des sièges comprenant un moyen d'identification (im1 - im4) incluant une information d'identification individuelle (ID), et un premier (r1, r2, h1, h2) et un deuxième dispositif (hu), au moins l'un d'entre eux ayant une interface homme-machine, dans lequel le premier dispositif peut être déplacé de l'un des sièges (s1 - s4) à un autre des sièges, le procédé comprenant les étapes suivantes :
- le premier dispositif (r1, r2, h1, h2) transmet une information d'identification du premier dispositif à l'un des sièges ou reçoit une information d'identification (ID) de l'un des sièges par l'intermédiaire du corps humain assis dans ledit un des sièges,
- l'attribution du premier dispositif (r1, r2, h1, h2) audit un des sièges (s1 - s4) pour qu'il soit utilisé par un utilisateur assis dans ledit un des sièges au moyen de l'information d'identification (ID) transmise ou reçue,
- l'interaction du premier dispositif (r1, r2, h1, h2) avec le deuxième dispositif (hu) en fonction de l'attribution du premier dispositif.

15. Procédé selon la revendication 14, dans lequel le deuxième dispositif (hu), qui est adapté pour traiter une information d'identification et pour commander ou être commandé par le premier dispositif (r1, r2, h1, h2) en fonction de celle-ci, demande et traite toutes les informations d'identification pouvant provenir des sièges (s1 - s4) et du premier dispositif.

16. Procédé selon la revendication 14 ou 15, dans lequel :
- le deuxième dispositif (hu) reçoit une demande de service provenant d'un utilisateur (p1 - p4) assis dans un premier des sièges (s3),
- le deuxième dispositif (hu) transmet une demande d'information au premier des sièges (s3) qui demande une information d'identification du premier des sièges et d'au moins un premier dispositif (h2, r1) qui doit être attribué au premier des sièges,
- le premier des sièges (s3) transmet une demande d'information qui demande une information d'identification du premier dispositif (h2, r1) tenu ou touché par l'utilisateur (p3) qui est assis dans le premier des sièges par l'intermédiaire du corps humain,
- le premier dispositif (h2, r1) transmet une information d'identification par l'intermédiaire du corps humain au premier des sièges (s3),
- le premier des sièges (s3) transmet des données de configuration correspondantes au deuxième dispositif (hu),
- le deuxième dispositif (hu) attribue le premier dispositif (h2, r1) au premier des sièges (s3) et sert la demande de service de l'utilisateur selon les données de configuration reçues par le premier des sièges.

17. Procédé selon la revendication 14, dans lequel le premier dispositif (h2) détecte sa propre configuration en demandant et en traitant l'information d'identification fournie par l'un des sièges (s1 - s4) et par n'importe quel autre dispositif (r1, r2, h1).

18. Procédé selon la revendication 14 ou 17, dans lequel :
- le premier dispositif (r1) reçoit une demande de service provenant d'un utilisateur (p3) assis dans un premier des sièges (s3),
- le premier dispositif (r1) transmet une demande d'information au premier des sièges (s3) qui demande une information d'identification du premier des sièges par l'intermédiaire du corps humain,
- le premier des sièges (s3) transmet une information d'identification par l'intermédiaire du corps humain au premier dispositif (r1),
- le premier dispositif (r1) transmet une information d'identification du premier des sièges (s3) et la demande de service faite par l'utilisateur au deuxième dispositif (hu),
- le deuxième dispositif (hu) sert la demande de service faite par l'utilisateur selon l'information d'identification reçue par le premier dispositif (r1).

19. Procédé selon la revendication 18, dans lequel :
- l'utilisateur (p3) qui transmet la demande de service tient ou touche un troisième dispositif (h2),
- le troisième dispositif (h2) transmet une demande d'information au premier des sièges (s3) qui demande une information d'identification du premier des sièges,
- le premier des sièges (s3) transmet une information d'identification par l'intermédiaire du corps humain qui est assis dans le premier des sièges au troisième dispositif (h2),
- le troisième dispositif (h2) s'attribue lui-même au premier des sièges (s3) et réalise une opération de configuration en fonction de celui-ci.

20. Procédé selon la revendication 14, dans lequel le premier dispositif (r1) reçoit une demande de service faite par un utilisateur (p3) qui est assis dans un premier des sièges (s3) et gère les autres dispositifs (h2) qui sont tenus ou touchés par l'utilisateur et transmet des données de configuration concernées au deuxième dispositif (hu) pour servir la demande de service.

21. Procédé selon la revendication 14 ou 20, dans lequel :
- le premier dispositif (r1) reçoit une demande de service faite par un utilisateur (p3) qui est assis dans un premier des sièges (s3),
- le premier dispositif (r1) transmet une demande d'information qui demande une information d'identification par l'intermédiaire du corps humain de l'utilisateur depuis le premier des sièges (s3) et depuis au moins un troisième dispositif (h2) qui doit être attribué au premier des sièges (s3),
- le premier des sièges (s3) transmet une information d'identification par l'intermédiaire du corps humain au premier dispositif (r1),
- le troisième dispositif (h2) transmet une information d'identification par l'intermédiaire du corps humain au premier dispositif (r1),
- le premier dispositif (r1) transmet des données de configuration correspondantes au deuxième dispositif (hu) et la demande de service faite par l'utilisateur,
- le deuxième dispositif (hu) attribue les premier et troisième dispositifs (r1, h2) au premier des sièges (s3) et sert la demande de service faite par l'utilisateur selon les données de configuration reçues par le premier dispositif (r1).

22. Procédé selon l'une des revendications 14 à 21, dans lequel le premier dispositif (r1, r2, h1, h2) est automatiquement attribué à l'un des sièges (s1 s4) quand un utilisateur (p1 p4) assis dans l'un des sièges fait fonctionner ou touche le dispositif.

23. Procédé selon l'une des revendications 14 à 22, dans lequel lorsque le premier dispositif (r1, r2, h1, h2) est touché par le corps de l'utilisateur, le fonctionnement du premier dispositif ou du deuxième dispositif (hu) démarre automatiquement.

24. Procédé selon l'une des revendications 14 à 23, dans lequel lorsque le premier dispositif (r1, r2, h1, h2) perd le contact d'avec le corps de l'utilisateur, le fonctionnement du premier dispositif ou du deuxième dispositif (hu) s'arrête automatiquement.
